# EUROPÄISCHE PATENTSCHRIFT

(11) **EP 0 717 010 B1**
(45) Veröffentlichungstag und Bekanntmachung des Hinweises auf die Patenterteilung: **09.06.1999**
(21) Anmeldenummer: 95119267.3
(22) Anmeldetag: 07.12.1995
(51) Int. Cl.: C03B 5/027, H05B 3/03, C03B 5/167

(54) **Elektrodenanordnung für Glas-Wannenöfen**
Positioning of an electrode for a glass melting tank furnace
Disposition d'électrode pour four à cuve pour fusion du verre

(30) Priorität: 17.12.1994 DE 4445167
(43) Veröffentlichungstag der Anmeldung: 19.06.1996
(73) Patentinhaber: Beteiligungen Sorg GmbH & Co. KG, D-97816 Lohr (DE)
(72) Erfinder: Pieper, Helmut, Dipl.-Ing., D-97816 Lohr am Main (DE)
(74) Vertreter: Zapfe, Hans, Dipl.-Ing.

(56) Entgegenhaltungen:
- EP-A- 0 164 809
- EP-A- 0 261 749
- DE-A- 2 621 380
- FR-A- 977 606
- GB-A- 741 606
- US-A- 2 978 526
- US-A- 4 468 779

## Beschreibung

Die Erfindung betrifft eine Elektrodenanordnung für Glas-Wannenöfen nach dem Oberbegriff des Patentanspruchs 1.

Es ist bekannt, stabförmige Elektroden, die in der Regel aus Molybdän, hochlegierten Stählen oder Inconel bestehen, wahlweise durch den Oberofen, das Gewölbe, Seitenwände oder den Boden der Wanne in die Glasschmelze einzuführen und diese durch den Ohm'schen Widerstand der Glasschmelze und direkten Stromfluß zu beheizen. In der Mehrzahl aller Fälle wird als Elektrodenmaterial Molybdän verwendet.

In der Ofenatmosphäre, die einen nicht vernachlässigbaren Anteil an Sauerstoff enthält, herrschen je nach der Zusammensetzung der Glasschmelze Temperaturen bis zu etwa 1600 °C. Bei diesen Temperaturen neigen die meisten Elektrodenmetalle zu einer starken Oxidation, die zur baldigen Zerstörung führt. Insbesondere Molybdän oxidiert ab einer Temperatur von etwa 550 °C in merklichem Umfange.

Der in die Glasschmelze eingetauchte Teil der Elektrode leidet nicht in gleichem Umfange unter einer Oxidation, da die Glasschmelze selbst eine gewisse Schutzwirkung gegen Oxidation ausübt. Hierbei stellt sich also das Oxidationsproblem nur in untergeordnetem Maße.

Durch die DE-B-24 25 025 und die US-A-5 125 002 ist es bekannt, bei Elektroden, die durch den Boden der Glaswanne in die Glasschmelze eingeführt werden, einen von der Schmelze entfernten Teil der Elektrode mit einem Kühlmantel zu umgeben, im übrigen aber zwischen der Elektrode und dem sie umgebenden Elektrodenstein einen ringförmigen Spalt freizulassen, in den die Glasschmelze eintritt und zwecks Erzielung einer Abdichtwirkung zur Erstarrung gebracht wird. Zur Verschiebung der Elektrode muß durch Verringerung der Kühlleistung dafür gesorgt werden, daß das die Elektrode umgebende Glas aufschmilzt. Hierbei nimmt aber notwendigerweise die nicht mit der Glasschmelze in Berührung stehende Teillänge der Elektrode eine erhöhte Temperatur an, die wiederum die Oxidationsgefahr beschleunigt. Um diese Oxidationsgefahr zu verringern, wird in den beiden vorstehend genannten Schritten vorgeschlagen, an dem der Glasschmelze abgekehrten Ende des Kühlkörpers eine Abdichtung vorzusehen, und den Zwischenraum zwischen dem Kühlkörper und der Elektrode mit einem unter Druck stehenden Inertgas zu beaufschlagen. Die laufende Versorgung mit Inertgas ist jedoch ein aufwendiger Vorgang, zumal Glas-Wannenöfen in der Regel mit einer Mehrzahl derartiger Elektroden versehen sind. Außerdem führen die ständigen Temperaturänderungen, die zur Erstarrung des Glases einerseits und zu dessen Aufschmelzen andererseits erforderlich sind, zu starken thermischen Wechselbelastungen des Wannenbodens und der Elektrodenhalterung. Starke Temperaturwechsel sind aber bei Glas-Wannenöfen stets ein unerwünschter Vorgang.

Man hat ähnliche Elektrodendurchführungen aber auch schon für Seitenwände von Glaswannen vorgesehen. Derartige Durchführungen sind in der DE-B-10 15 989 und in der DE-A-29 18 643 beschrieben. Bei beiden Anordnungen wird gleichfalls Glas als Dichtungsmaterial verwendet, das zum Zwecke einer Verschiebung der Elektroden zunächst aufgeschmolzen werden muß.

Die genannten Konstruktionen lassen sich jedoch nur bis zu Temperaturen von ca. 1000 bis 1050 °C aufheizen, da über dieser Temperatur die Festigkeit des Halters soweit heruntergesetzt wird, daß es beim Schieben der Elektrode zur Zerstörung des Halters kommt. Es gibt aber durchaus Gläser, deren Erweichungsbereich über den genannten Temperaturen liegt, so daß sich hierbei ein Abstellen der Kühlung des Halters verbietet.

Durch die DE-A1-26 21 380 ist eine Elektrodenanordnung mit einem radial verlaufenden Gestängesystem, sogenannten Primärelektroden, bekannt, bei dem die Gestängeteile an derjenigen Stelle, an der sie den Schmelzenspiegel durchdringen, mit nicht als Halter ausgebildeten Kühlmanschetten versehen sind, um eine Schädigung durch Luftsauerstoff zu vermindern. Eine Verstellung der Gestängeteile innerhalb der Manschette ist jedoch nicht vorgesehen, außerdem sind die Kühlmanschetten gegenüber dem jeweiligen Gestängeteil nicht abgedichtet. Die eigentlichen Elektrodenhalter liegen außerhalb der Glasschmelze.

Durch die FR-A-977 606 ist es bekannt, verschiebbare Elektroden von schräg oben durch einen Ofendeckel in eine Glasschmelze eintauchen zu lassen. Zur Kühlung der Elektroden sind diese von einem zylindrischen Kühlkörper umgeben, der von einer Kühlflüssigkeit durchströmt wird. Das untere Ende dieses Kühlkörpers taucht dabei verhältnismäßig tief in die Glasschmelze ein, so daß diese durch ihren hydrostatischen Druck in den Spalt zwischen Elektrode und Kühlkörper eindringen kann. Dadurch kann das Glas im Spalt erstarren und die Elektroden an ihren Bewegungen behindern. Das obere Ende des Kühlkörpers liegt oberhalb des Schmelzenspiegels und oberhalb des Ofendeckels und ist zur Atmosphäre hin offen, so daß Luftsauerstoff in den von Schmelze freien Teil des Spaltes eindringen und das Elektrodenmaterial oxidieren kann, wenn die Elektrode oberhalb des eingefrorenen Glases eine ausreichend hohe Temperatur aufweist, was nicht auszuschließen ist. Dadurch entsteht eine Sauerstoffsenke, zu der ständig neuer Sauerstoff durch Diffusion nachströmt. Dabei besteht das konträre Problem, einerseits die Elektrode durch entsprechend hohe Temperaturen beweglich zu halten, andererseits aber, die Elektrode möglichst wirksam zu kühlen. Die beiden Forderungen stehen sich diametral entgegen.

Durch die US-A-4 468 770 ist eine Elektrode für Glasschmelzöfen bekannt, die aus einer Elektrodenspitze aus z.B. dem bei hohen Temperaturen sauerstoffaffinen Molybdän und aus einem wassergekühlten, rohrförmigen Elektrodenschaft aus z.B. Edelstahl besteht. Die beiden Elektrodenteile sind durch eine Schraubverbindung miteinander verbunden, so daß sich nicht das Problem stellt, die Elektrodenteile zu Regelzwecken gegeneinander zu verschieben. Die Eintauchtiefe wird vielmehr durch Verschwenken und/oder Nachschieben der Gesamtelektrode geregelt. Da die Elektrodenspitzen sich allmählich durch Abbrand verbrauchen, wird deren wirksame Oberfläche, die den Stromfluß bestimmt, allmählich sowohl in der Länge als auch im Durchmesser kleiner. Das notwendige Nachstellen der Elektrode hat dadurch zur Folge, daß der gekühlte Elektrodenschaft zunehmend mehr in die Glasschmelze eintaucht, wobei er sich mit einer erstarrten Schicht von Glas überzieht, das eine geringe elektrische Leitfähigkeit aufweist, so daß sich der Energietransport zunehmend auf die ohnehin hoch belastete und weitgehend ungekühlte Elektrodenspitze konzentriert. Dabei taucht aber auch die Gewindeverbindung zunehmend tiefer in die Schmelze ein und neigt zu einem Festbrennen, wodurch das Auswechseln der Elektrode erheblich erschwert, wenn nicht gar ohne Zerstörung der Gewindeverbindung unmöglich gemacht wird. Die der Erfindung zugrunde liegenden Probleme stellen sich hierbei nicht.

Durch die DE-A1-38 15 558 ist ein gattungsgemäßer Elektrodenhalter bekannt, der mit waagrechter Achse in die Ofenwand eingesetzt ist. Dadurch läßt sich bei einem unvermeidlichen Spiel zwischen Elektrode und Halter und bei flüssigem Glas nicht vermeiden, daß eindringendes Glas die Luft in dem Zylinderspalt bis zu der nicht nachstellbaren Dichtung verdrängt und im Bereich der von innen nach außen nachlassenden Kühlwirkung einfriert, so daß die Nachstellung beeinträchtigt wird. Die Stelle, an der das Einfrieren beginnt, ist dabei eine Frage der Kühlintensität. In jedem Fall dient auch hierbei unter hydrostatischem Druck stehendes Glas als Abdichtmittel.

Der Erfindung liegt daher die Aufgabe zugrunde, eine Elektrodenanordnung der eingangs beschriebenen Gattung anzugeben, bei der Glas nicht mehr als Abdichtmittel benötigt wird und in jedem Fall im Bereich des kälteren Teils der Elektrode ein verhältnismäßig langer glas- und sauerstoffreier und nicht unter hydrostatischem Druck der Schmelze stehender Spalt erhalten bleibt, so daß die Verschiebung der Elektrode nicht mehr in kritischer Weise von der Kühlintensität abhängig ist.

Die Lösung der gestellten Aufgabe erfolgt bei der eingangs beschriebenen Elektrodenanordnung erfindungsgemäß durch die Merkmale im Kennzeichen des Patentanspruchs 1.

Der Kern der Erfindung besteht also darin, die Elektrode von oben oder von schräg oben in die Schmelze zu führen und das untere Ende des Elektrodenhalters in die Glasschmelze und/oder in eine auf der Glasschmelze schwimmende Galleschicht eintauchen zu lassen, und zwar in einem möglichst geringen Maß, während eine Abdichtung des möglichst knapp gehaltenen Ringraumes zwischen der Elektrode und dem Elektrodenhalter oberhalb des Füllstandes erfolgt. Durch die erfindungsgemäßen Maßnahmen wird zunächst einmal erreicht, daß der in den Ofeninnenraum hineinragende Teil der Elektrode durch das Glas gegen die Einwirkung von Sauerstoff abgeschirmt ist, und daß im Ringraum enthaltenes Gas nicht durch etwa eindringende Schmelze verdrängt werden kann, die nachfolgend erstarrt und die Elektrode blockiert. Durch die Abdichtung oberhalb des Füllstandes der Glasschmelze wird erreicht, daß von dieser Seite aus kein Sauerstoff in den Spalt zwischen Elektrode und Elektrodenhalter eindringen kann. Außerdem ist dieser Längenabschnitt der Elektrode durch den zwangsgekühlten Elektrodenhalter stark gekühlt, so daß auch dadurch die Oxidationsneigung wesentlich unterdrückt wird.

Das Zusammenwirken der beschriebenen Maßnahmen führt dazu, daß der nicht durch die Glasschmelze geschützte Teil der Elektrode ständig auf einem niedrigen Temperaturniveau gehalten und zusätzlich noch gegenüber einer Einwirkung des Sauerstoffs geschützt ist. Die erfindungsgemäßen Maßnahmen führen zu einer Raumlage der Elektrodenachse, die senkrecht verlaufen kann, zweckmäßigerweise aber unter einem Winkel von 10 Grad bis 60 Grad, vorzugsweise unter einem Winkel von 20 Grad bis 40 Grad, zur Senkrechten verläuft. Es ist dabei insbesondere auch nicht erforderlich, in den außerordentlich engen Ringspalt zwischen der Elektrode und dem Elektrodenhalter ein unter Druck stehendes Inertgas einzuführen, weil bereits der erfindungsgemäße Aufbau der Elektrode eine hinreichende Abdichtung gewährleistet.

Infolge der Tatsache, daß die Elektroden nicht - wie beim Stande der Technik -versiegelt werden, d.h. infolge der Tatsache, daß sich kein Glas mehr zwischen Elektrodenhalter und Elektrode befindet, lassen sich die Elektroden bei wesentlich niedrigeren Haltertemperaturen verschieben, so daß auch der Elektrodenhalter eine wesentlich verlängerte Standzeit aufweist.

Es ist dabei im Zuge einer weiteren Ausgestaltung der Erfindung besonders vorteilhaft, wenn der Elektrodenhalter ein Außenrohr und ein Innenrohr aufweist, die einen Hohlraum für ein Kühlmittel zwischen sich einschließen, und wenn das Innenrohr mit seinem oberen Ende aus dem Außenrohr herausragt und mit einer mit der Elektrode zusammenwirkenden Dichtungseinrichtung versehen ist, die als nachstellbare Stopfbuchsdichtung ausgeführt sein kann.

Eine besonders einfache Festlegung des Elektrodenhalters im Elektrodenstein erfolgt durch die Zwischenschaltung einer Isolierhülse aus einem Werkstoff, der auch bei hohen Temperaturen noch nicht elektrisch leitend ist.

Es ist im Zuge einer wiederum weiteren Ausgestaltung der Erfindung besonders vorteilhaft, wenn die untere Stirnfläche des Elektrodenhalters zumindest im wesentlichen in einer Ebene mit einer unteren Stirnfläche des Elektrodensteins liegt. Auf diese Weise wird einerseits erreicht, daß sich zwischen der Elektrode und dem Elektrodenstein kein Ringspalt bildet, in den erstarrendes Glas eindringen könnte, andererseits existiert auch kein in die Schmelze vorspringender Teil des gekühlten Elektrodenhalters, auf dem Glas erstarren könnte, und der direkt dem Angriff der heißen Schmelze ausgesetzt ist.

Um die Montage und Demontage der Elektrodenanordnung zu erleichtern, ist zweckmäßig der Elektrodenstein beim Vorhandensein eines Gewölbes über der Wanne in einer Trennfuge zwischen einer Oberkante der Wanne und dem Gewölbe angeordnet, und das Gewölbe ist für jede Elektrodenanordnung mit einem Ausschnitt für den Elektrodenstein versehen.

Dadurch, daß der Ausschnitt im Gewölbe weiterhin eine Aussparung aufweist, in die der Elektrodenstein hineinschwenkbar ist, wird die Montage und Demontage der gesamten Elektrodenanordnung wesentlich erleichtert.

Die erfindungsgemäße Elektrodenanordnung ist in ganz besonders vorteilhafter Weise für Schmelzöfen geeignet, in denen die Verglasung von umweltgefährdenden Abfallstoffen wie Asbest, radioaktiven Abfällen, Filterstaub aus Verbrennungsanlagen etc., durchgeführt wird.

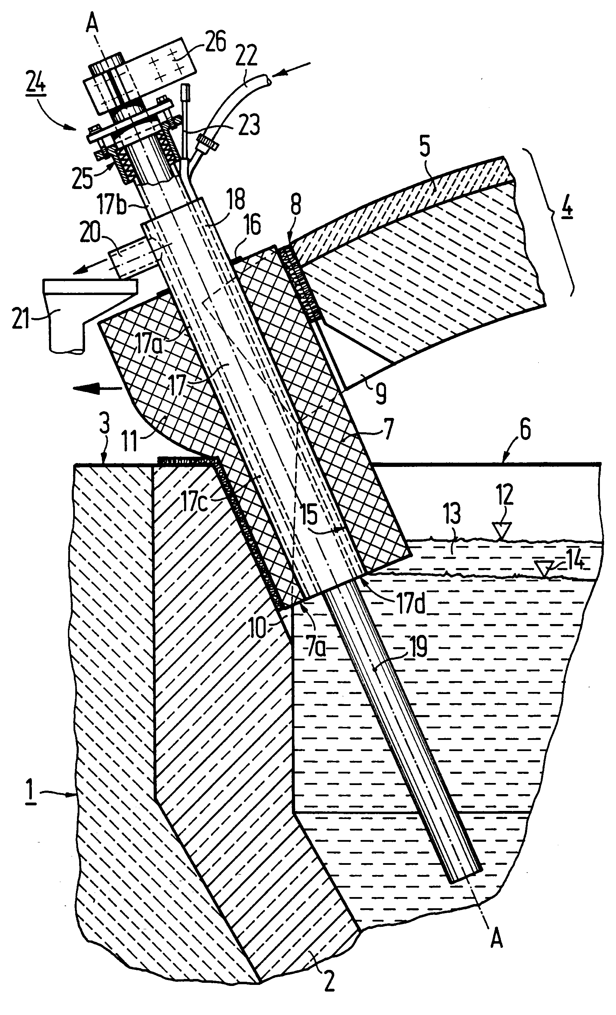

Ein Ausführungsbeispiel des Erfindungsgegenstandes wird nachfolgend anhand der einzigen Figur näher erläutert, die eine Seitenansicht von Elektrode und Elektrodenhalter sowie Schnitte durch den Elektrodenstein, die Wanne, das Gewölbe und die Stopfbuchsdichtung zeigt.

In der Figur ist eine Wanne 1 eines Glas-Wannenofens dargestellt, deren Innenseite von einer Stampfmasse 2 gebildet wird. Die Wanne 1 besitzt eine umlaufende Oberkante 3, auf die ein Gewölbe 4 aufgesetzt ist, zu dem ein Isolierbelag 5 gehört. Zwischen der Oberkante 3 und dem Gewölbe 4 wird eine Trennfuge 6 gebildet, in deren Bereich ein Elektrodenstein 7 angeordnet ist. Zu dessen Unterbringung besitzt das Gewölbe 4 einen entsprechend dem Elektrodenstein geformten Ausschnitt 8, der auf der Innenseite des Gewölbes 4 durch eine Aussparung 9 erweitert ist, die eine solche Form hat, daß der Elektrodenstein 7 bei einer Schwenkbewegung entgegen dem Uhrzeigersinne teilweise in diese Aussparung 9 hinein schwenkbar ist.

Auch die Stampfmasse 2 besitzt im Bereich der Trennfuge 6 eine Aussparung 10, in die der Elektrodenstein 7 mit einem Teil seines Umfanges hineinragt. Der Elektrodenstein 7 besitzt auf seiner Außenseite einen nasenförmigen Vorsprung 11, der sich auf der Oberkante 3 abstützt. Zwischengeschaltetes Dichtungsmaterial aus Mineralfasern ist angedeutet, aber nicht näher bezeichnet.

Die Wanne 1 ist für einen ersten Füllstand 12 konstruiert, d.h. durch vorrichtungsseitige Maßnahmen wird dafür Sorge getragen, daß dieser Füllstand 12 beim Betrieb stets eingehalten wird.

Sofern sich beim Schmelzbetrieb, insbesondere beim Einschmelzen von Abfallstoffen, eine sogenannte Galleschicht 13 bildet, ist für die maximale Dicke der Galleschicht ein zweiter Füllstand 14 vorgesehen, der nicht unterschritten werden soll.

Der Elektrodenstein 7 weist eine zylindrische Längsbohrung 15 auf, in der zunächst eine Isolierstoffhülse 16 konstanter Wandstärke angeordnet ist, die lediglich an ihrem oberen Ende einen nicht besonders hervorgehobenen Ringflansch besitzt. In der wiederum zylindrischen Innenbohrung der Isolierstoffhülse 16 befindet sich mit kleinstmöglicher Toleranz ein hülsenförmiger Elektrodenhalter 17, der auf dem größten Teil seiner Länge mit einer Einrichtung 18 zur Zwangskühlung versehen ist. Diese Einrichtung wird dadurch gebildet, daß der Elektrodenhalter 17 ein Außenrohr 17a und ein Innenrohr 17b aufweist, die einen Hohlraum 17c zur Durchleitung eines Kühlmittels zwischen sich einschließen.

In dem Innenrohr 17b ist - wiederum mit kleinstmöglichem Spiel - eine stabförmige Elektrode 19 angeordnet, die in diesem Fall aus einem Rundstab aus Molybdän besteht. Diese Elektrode ragt mit einem beträchtlichen Teil ihrer Länge aus der unteren Stirnfläche 17d des Elektrodenhalters 17 heraus, und die besagte Stirnfläche liegt in einer Ebene mit einer unteren Stirnfläche 7a des Elektrodensteins 7. Wie bereits gesagt, wird dadurch die Bildung eines Ringraumes zwischen der Elektrode 19 und dem Elektrodenstein 7 vermieden, und weiterhin wird dafür gesorgt, daß der gekühlte Elektrodenhalter 17 nicht in die Glasschmelze hineinragt, so daß an dieser Stelle keine unzulässigen Mengen an erstarrtem Glas gebildet werden können. Es ist der Figur zu entnehmen, daß der äußerst enge Zylinderspalt zwischen dem Elektrodenhalter 17 und der Elektrode 19 von der Glasschmelze abgedeckt ist, und insbesondere ist zu erkennen, daß die gesamte freie Länge der Elektrode 19 unterhalb des Füllstandes 12 liegt. Eine Berührung der freien Oberfläche der Elektrode 19 mit Sauerstoff ist damit ausgeschlossen.

Das Außenrohr 17a ragt um ein gewisses Maß aus dem Elektrodenstein 7 bzw. aus der Isolierhülse 16 heraus und besitzt auf diesem Längenabschnitt einen seitlichen Rohrstutzen 20, durch den das Kühlmittel, in der Regel Wasser, in einen Auffangtrichter 21 abgeleitet wird. Das Kühlmedium wird dem Hohlraum 17c über eine Kühlmittelleitung 22 zugeführt. Gezeigt ist noch das äußere Ende eines Temperaturfühlers 23, mit dem die Temperatur des Elektrodenhalters 17 an der kritischen Stelle, nämlich im Bereich der Stirnfläche 17d, erfaßt werden kann.

Das Innenrohr 17b des Elektrodenhalters 17 ragt über das obere Ende des Außenrohres 17a hinaus und ist an seinem oberen Ende mit einer mit der Elektrode 19 zusammenwirkenden Dichtungseinrichtung 24 versehen, die als nachstellbare Stopfbuchsdichtung 25 ausgeführt ist. Auf diese Weise wird der Eintritt von Luft-Sauerstoff aus der äußeren Umgebung des Elektrodenhalters 17 in das Innenrohr 17b wirksam verhindert. Aufgrund der Tatsache, daß die Elektrode 19 an dieser Stelle unter der Wirkung des gekühlten Elektrodenhalters 17 eine sehr niedrige Temperatur aufweist, wird dieser Teilabschnitt der Elektrode 19 gleichfalls wirksam gegen Oxidation geschützt. Oberhalb der Dichtungseinrichtung 24 ist auf das äußerste Ende der Elektrode 19 ein Elektroanschluß 26 aufgeklemmt, dessen Funktion aus sich heraus verständlich ist.

Elektrodenhalter 17 und Elektrode 19 besitzen eine gemeinsame Achse A-A, die unter einem Winkel von 25 Grad zur Senkrechten verläuft. Zum Zwecke eines Ausbaus der gesamten Elektrodenanordnung wird diese um eine senkrecht zur Zeichenebene stehende weitere Achse geschwenkt, wobei der innere Teil des Elektrodensteins 7 in die Aussparung 9 im Gewölbe 4 hineingeschwenkt wird. In dieser Lage läßt sich die gesamte Elektrodenanordnung leicht aus dem Glas-Wannenofen herausziehen, warten und gegebenenfalls ersetzen.

Versuche mit dem Erfindungsgegenstand beim Verglasen von sogenannter Flugasche aus Verbrennungsanlagen, haben gezeigt, daß die stabförmige Elektrode im Elektrodenhalter ohne größere Kraftanstrengungen verschoben werden kann, insbesondere aber ohne die Notwendigkeit, die Kühlung zu reduzieren und dadurch einen Anstieg der Elektroden- und Haltertemperatur in dem Bereich in Kauf nehmen zu müssen, in dem die Elektrode nicht mehr in die Glasschmelze eintaucht. Weiterhin hat sich gezeigt, daß Dank der Verwendung der Dichtungseinrichtung 24 am oberen Ende der Elektrode ein Eindringen von Luftsauerstoff unterbleibt. Durch die geringe Temperatur an dieser Stelle bleibt auch die Dichtungswirkung der Dichtungseinrichtung über sehr lange Zeit erhalten. Eine Oberflächenoxidation des nicht von der Glasschmelze benetzten Teils der Elektrode konnte nicht beobachtet werden.

## Patentansprüche

1. Elektrodenanordnung für Glas-Wannenöfen mit einer stabförmigen Elektrode (19), die verschiebbar durch einen hülsenförmigen, eine Stirnfläche (17d) aufweisenden Elektrodenhalter (17) hindurchgeführt ist, der auf mindestens einem Teil seiner Länge mit einer Einrichtung (18) zur Zwangskühlung versehen und in einem Elektrodenstein (7) der Wanne (1) angeordnet ist, wobei die Stirnfläche (17d) unterhalb des konstruktiv vorgesehenen Füllstandes (12) der Wanne (1) angeordnet und der Elektrodenhalter (17) außerhalb der Wanne (1) an seinem äußeren Ende mit einer Dichtungseinrichtung (24) gegenüber der Elektrode (19) versehen ist, **dadurch gekennzeichnet**,
a) daß die Achse (A-A) des Elektrodenhalters (17) und der Elektrode (19) unter einem Winkel von 0 Grad bis 60 Grad zur Senkrechten verläuft, wobei die Elektrode von oben in die Wanne ragt,
b) daß der Elektrodenhalter, und damit die Einrichtung (19) zur Zwangskühlung in möglichst geringem Maße in die Schmelze eintaucht und die Einrichtung zur Zwangskühlung, von dem Eintauchmaß ausgehend, bis über den Füllstand (12) nach oben geführt ist und
c) daß der Elektrodenhalter (17) mit Abstand von diesem Füllstand (12) mit der Dichtungseinrichtung (24) versehen ist, die das Eindringen von Sauerstoff in den nicht unter dem hydrostatischen Druck der Schmelze stehenden Spalt zwischen Elektrode (19) und Elektrodenhalter (17) verhindert.

2. Elektrodenanordnung nach Anspruch 1, **dadurch gekennzeichnet**, daß die Achse (A-A) des Elektrodenhalters (17) und der Elektrode (19) unter einem Winkel von 20 bis 40 Grad zur Senkrechten verläuft.

3. Elektrodenanordnung nach Anspruch 1, **dadurch gekennzeichnet**, daß der Elektrodenhalter (17) ein Außenrohr (17a) und ein Innenrohr (17b) aufweist, die einen Hohlraum (17c) für ein Kühlmittel zwischen sich einschließen und daß das Innenrohr (17b) mit seinem oberen Ende aus dem Außenrohr (17a) herausragt und daß die Dichtungseinrichtung (24) als nachstellbare Stopfbuchsdichtung (25) ausgeführt ist.

4. Elektrodenanordnung nach Anspruch 1, **dadurch gekennzeichnet**, daß der Elektrodenhalter (17) unter Zwischenschaltung einer Isolierhülse (16) im Elektrodenstein (7) angeordnet ist.

5. Elektrodenanordnung nach Anspruch 1 **dadurch gekennzeichnet**, daß die untere Stirnfläche (17d) des Elektrodenhalters (17) zumindest im wesentlichen in einer Ebene mit einer unteren Stirnfläche (7a) des Elektrodensteins (7) liegt.

6. Elektrodenanordnung nach Anspruch 1, **dadurch gekennzeichne**t, daß der Elektrodenstein (7) beim Vorhandensein eines Gewölbes (4) über der Wanne (1) in einer Trennfuge (6) zwischen einer Oberkante (3) der Wanne (1) und dem Gewölbe (4) angeordnet ist und daß das Gewölbe (4) für jede Elektrodenanordnung mit einem Ausschnitt (8) für den Elektrodenstein (7) versehen ist.

7. Elektrodenanordnung nach Anspruch 6, **dadurch gekennzeichnet**, daß der Ausschnitt (8) im Gewölbe (4) eines Aussparung (10) aufweist, in den der Elektrodenstein (7) hinein schwenkbar ist.

8. Verwendung der Elektrodenanordnung nach einem oder mehreren der vorangegangenen Ansprüche in einem Schmelzofen für die Verglasung von umweltgefährdenden Abfallstoffen.

## Claims

1. Electrode arrangement for glass tank furnaces with a rod-shaped electrode (19), which is passed displaceably through a sleeve-shaped electrode holder (17) having a face (17d), said electrode holder being provided with a means (18) for forced cooling on at least one portion of its length and arranged in an electrode brick (7) of the tank (1), whereby the face (17d) is arranged below the structurally provided filling level (12) of the tank (1), and outside the tank (1) on its outer end the electrode holder (17) is provided with a sealing means (24) against the electrode (19), characterised
a) in that the axis (A-A) of the electrode holder (17) and the electrode (19) runs at an angle of 0 degrees to 60 degrees to the vertical, whereby the electrode projects from above into the tank;
b) that the electrode holder, and thus the means (19) for forced cooling, is immersed in the melt to the smallest possible degree and, working from the degree of immersion, the means for forced cooling is directed upwards to above the filling level (12); and
c) that at a distance from this filling level (12), the electrode holder (17) is provided with the sealing means (24), which prevents the penetration of oxygen into the gap not subject to the hydrostatic pressure of the melt between the electrode (19) and the electrode holder (17).

2. Electrode arrangement according to Claim 1, characterised in that the axis (A-A) of the electrode holder (17) and the electrode (19) runs at an angle of 20 to 40 degrees to the vertical.

3. Electrode arrangement according to Claim 1, characterised in that the electrode holder (17) has an outer tube (17a) and an inner tube (17b), which between them enclose a cavity (17c) for a coolant, and that at its upper end the inner tube (17b) projects out of the outer tube (17a), and that the sealing means (24) is constructed as an adjustable stuffing box seal (25).

4. Electrode arrangement according to Claim 1, characterised in that the electrode holder (17) is arranged in the electrode brick (7) with an intermediate sleeve (16) interposed.

5. Electrode arrangement according to Claim 1, characterised in that the lower face (17d) of the electrode holder (17) lies at least substantially in a plane with a lower face (7a) of the electrode brick (7).

6. Electrode arrangement according to Claim 1, characterised in that where an arch (4) is present over the tank (1), the electrode brick (7) is arranged in a parting line (6) between an upper edge (3) of the tank (1) and the arch (4), and that for each electrode arrangement the arch (4) is provided with a cutout section (8) for the electrode brick (7).

7. Electrode arrangement according to Claim 6, characterised in that the cutout section (8) in the arch (4) has a recess (10) into which the electrode brick (7) may be swivelled.

8. Use of the electrode arrangement according to one or more of the preceding claims in a melting furnace for the vitrification of waste substances which endanger the environment.

## Revendications

1. Configuration d'électrode pour des fours à cuve pour du verte avec une électrode en forme de tige (19), laquelle est introduite en pouvant être déplacée à travers un support d'électrode (17) en forme de manchon présentant une surface avant (17d), lequel est muni sur au moins une partie de sa longueur d'un dispositif (18) pour une réfrigération forcée et est disposé dans une pierre d'électrode (7) de la cuve (1), la surface avant (17d) étant disposée en dessous du niveau de remplissage (12) de la cuve (1) prévu dans la construction et le support d'électrode (17) étant muni à l'extérieur de la cuve (1) sur son extrémité externe d'un dispositif d'étanchéité (24) pour l'électrode (19) caractérisée
a) en ce que l'axe (A-A) du support d'électrode (17) et de l'électrode (19) est disposé sous un angle de 0 degré à 60 degrés par rapport à la verticale, l'électrode se dressant dans la cuve à partir du haut,
b) en ce que le support d'électrode et ainsi le dispositif (19) pour une réfrigération forcée est immergé dans la mesure la plus faible possible dans la masse en fusion et le dispositif pour une réfrigération forcée est introduit vers le haut en partant de la mesure d'immersion jusqu'au-dessus du niveau de remplissage (12) et
c) en ce que le support d'électrode (17) est muni d'un dispositif d'étanchéité (24) éloigné de ce niveau de remplissage (12), lequel empêche l'introduction d'oxygène dans la fente entre l'électrode (19) et le support d'électrode (17) ne se trouvant pas sous la pression hydrostatique de la masse en fusion.

2. Configuration d'électrode selon la revendication 1, caractérisé en ce que l'axe (A-A) du support d'électrode (17) et de l'électrode (19) est disposé sous un angle de 20 à 40 degrés par rapport à la verticale.

3. Configuration d'électrode selon la revendication 1, caractérisé en ce que le support d'électrode (17) présente un tuyau externe (17a) et un tuyau interne (17b), lesquels comprennent entre eux un espace creux (17c) pour un agent réfrigérant et en ce que le tuyau interne (17b) se dresse avec son extrémité supérieure à l'extérieur du tuyau externe (17a) et en ce que le dispositif d'étanchéité (24) est réalisé comme une étanchéité de presse-étoupe (25) réglable.

4. Configuration d'électrode selon la revendication 1, caractérisée en ce qu'un manchon d'isolation (16) dans la pierre d'électrode (7) est disposé à côté du support d'électrode (17) avec un raccord intermédiaire.

5. Configuration d'électrode selon la revendication 1, caractérisée en ce que la surface avant inférieure (17d) du support d'électrode (17) se trouve au moins de manière importante dans un plan avec une surface avant inférieure (7a) de la pierre d'électrode (7).

6. Configuration d'électrode selon la revendication 1, caractérisée en ce que la pierre d'électrode (7) est disposée en présence d'une voûte (4) au-dessus de la cuve (1) dans une fente de séparation (6) entre une arête supérieure (3) de la cuve (1) et la voûte (4) et en ce que la voûte (4) est munie pour chaque configuration d'électrode d'une découpe (8) pour la pierre d'électrode (7).

7. Configuration d'électrode selon la revendication 6, caractérisée en ce que la découpe (8) dans la voûte (4) présente un évidement (10), à l'intérieur duquel la pierre d'électrode (7) peut pivoter.

8. Utilisation de la configuration d'électrode selon l'une ou plusieurs quelconques des revendications précédentes dans un four de fusion pour la vitrification de déchets dangereux pour l'environnement.
